# EUROPEAN PATENT APPLICATION

(11) **EP 4 589 717 A1**
(43) Date of publication of application: **23.07.2025**
(21) Application number: 23947248.3
(22) Date of filing: 12.09.2023
(51) Int. Cl.: H01M 10/0587, H01M 10/0525, H01M 50/533, H01M 50/516, H01M 50/528, H01M 50/107, H01M 50/213, H01M 50/249

(54) **BATTERY CELL, BATTERY AND ELECTRIC DEVICE**

(30) Priority: 01.08.2023 CN 202310955457
(71) Applicant: Contemporary Amperex Technology (Hong Kong) Limited, Central (HK)
(72) Inventor: WU, Kai, Ningde, Fujian 352100 (CN); CHAI, Zhisheng, Ningde, Fujian 352100 (CN); JIN, Haizu, Ningde, Fujian 352100 (CN)
(74) Representative: Ran, Handong
(86) International application number: PCT/CN2023/118343
(87) International publication number: WO 2025/025306

(57) **Abstract**

A battery cell (30), a battery (40) and an electric device. The battery cell (30) comprises: an electrode assembly (10), which comprises a first electrode sheet (11), a second electrode sheet (12) and a separator (13), wherein the polarity of the first electrode sheet (11) is opposite to that of the second electrode sheet (12), the separator (13) is located between the first electrode sheet (11) and the second electrode sheet (12), and the first electrode sheet (11), the second electrode sheet (12) and the separator (13) are wound in the direction of winding to form a wound structure (100), the first electrode sheet (11) comprising a plurality of first tabs (11B) bent at one end of the wound structure (100) to form a first tab stack structure (111), and the second electrode sheet (12) comprising a plurality of second tabs (12B) bent at one end of the wound structure (100) to form a second tab stack structure (121); a first conductor (21), which is welded to the first tab stack structure (111); and a second conductor (22), which is welded to the second tab stack structure (121). **In** a first direction (d1) parallel to the extension direction of the winding axis of the wound structure (100), at least one of a bend position (11f) of the plurality of first tabs (11B) and a bend position (12f) of the plurality of second tabs (12B) has a gap between same and the separator (13) in the first direction (d1).

## Description

### CROSS-REFERENCE TO RELATED APPLICATIONS

The present application is based on and claims priority to Chinese Patent Application with the application number of 202310955457.7 and the application date of August 1, 2023. The disclosure of the Chinese patent application is hereby incorporated in the present application in its entirety.

### TECHNICAL FIELD

The present disclosure relates to the technical field of batteries, and in particular, to a battery cell, a battery, and an electrical apparatus.

### BACKGROUND

Secondary batteries, especially lithium-ion batteries, have the advantages of high voltage, large specific energy, long cycle life, green and pollution-free, wide operating temperature range, small self-discharge, etc. They are widely used in portable electronic devices and power devices of large-scale new energy electric vehicles, and are of great significance to solving human environmental pollution and energy crisis. With the widespread application of lithium-ion batteries, the safety of battery usage has become an issue that users pay close attention to.

### SUMMARY OF THE INVENTION

In an aspect of the present disclosure, a battery cell is provided, including: an electrode assembly including a first electrode plate, a second electrode plate, and a spacer, where the first electrode plate and the second electrode plate have opposite polarities, the spacer is positioned between the first electrode plate and the second electrode plate, and the first electrode plate, the second electrode plate, and the spacer are wound along a winding direction to form a winding structure, with the first electrode plate including a plurality of first tabs that are bent at an end portion of the winding structure to form a first tab stacking structure, and the second electrode plate including a plurality of second tabs that are bent at an end portion of the winding structure to form a second tab stacking structure; a first conductive member welded to the first tab stacking structure; and a second conductive member welded to the second tab stacking structure, where in a first direction parallel to an extension direction of a winding axis of the winding structure, there is a gap between the spacer and at least one of a bending position of the plurality of first tabs and a bending position of the plurality of second tabs in the first direction.

The plurality of first tabs and the plurality of second tabs are bent at end portions of the winding structure to form the first tab stacking structure and the second tab stacking structure, respectively. By ensuring that there is a gap between the spacer and at least one of the bending position of the plurality of first tabs and the bending position of the plurality of second tabs in the first direction, the risk of the spacer being scorched by heat that is generated from the tabs and conducted to the spacer during the welding of the tab stacking structures to the conductive members can be reduced, thereby improving the product yield and the safety of use.

In some embodiments, a minimum distance in the first direction between the bending position of the plurality of first tabs and the spacer is defined as a first minimum distance L1, and a minimum distance in the first direction between the bending position of the plurality of second tabs and the spacer is defined as a second minimum distance L2; and the material of the plurality of first tabs has a melting point lower than that of the material of the plurality of second tabs, with the first minimum distance L1 being less than or equal to the second minimum distance L2.

For an embodiment of the battery cell where the material of the first tabs has a melting point lower than that of the material of the second tabs, the material of the second tabs with a higher melting point requires greater welding heat to form a weld pool. Accordingly, the second tab stacking structure generates more heat during welding. By increasing the second minimum distance L2, the risk of the spacer portion corresponding to the second tab stacking structure being scorched, as well as the risk of the spacer being burned by thermal radiation due to its proximity to the second tab stacking structure, can be reduced.

In some embodiments, a minimum distance in the first direction between the bending position of the plurality of first tabs and the spacer is defined as a first minimum distance L1, and a minimum distance in the first direction between the bending position of the plurality of second tabs and the spacer is defined as a second minimum distance L2; and the material of the plurality of first tabs has a melting point higher than that of the material of the plurality of second tabs, with the second minimum distance L2 being less than or equal to the first minimum distance L1.

For an embodiment of the battery cell where the material of the first tabs has a melting point higher than that of the material of the second tabs, the material of the first tabs with a higher melting point requires more welding heat to form a weld pool. Accordingly, the first tab stacking structure generates more heat during welding. By ensuring that the first minimum distance L1 is not less than the second minimum distance L2, the risk of a portion of the spacer corresponding to the first tab stacking structure being scorched, as well as the risk of the spacer being burned by thermal radiation due to its proximity to the first tab stacking structure, can be reduced.

In some embodiments, the bending position of the plurality of first tabs is a cutting root of the plurality of first tabs, and/or the bending position of the plurality of second tabs is a cutting root of the plurality of second tabs.

The bending position of the plurality of first tabs can be a cutting position where the tabs are cut on the portion of the current collector substrate of the first electrode plate that is uncovered by the active material layer. Accordingly, the first minimum distance L1 refers to the distance in the first direction between the cutting root of the plurality of first tabs and the spacer. The bending position of the plurality of second tabs can be a cutting position where the tabs are cut on the portion of the current collector substrate of the second electrode plate that is uncovered by the active material layer. Accordingly, the second minimum distance L2 refers to the distance in the first direction between the cutting root of the plurality of second tabs and the spacer.

In some embodiments, in the first direction, there is a third minimum distance L3 between the bending position of the plurality of first tabs and a tab top of the plurality of first tabs, and there is a fourth minimum distance L4 between the bending position of the plurality of second tabs and a tab top of the plurality of second tabs; and a first thickness t1 of the plurality of first tabs in a thickness direction of the first tabs is less than a second thickness t2 of the plurality of second tabs in a thickness direction of the second tabs, with the third minimum distance L3 being greater than or equal to the fourth minimum distance L4.

The third minimum distance L3 and the fourth minimum distance L4 respectively represent the lengths of the first tabs and the second tabs that are bent and involved in stacking. The longer the lengths of the tabs involved in stacking, the higher the degree of tab overlap. The first thickness t1 of the first tabs represents the thickness of a single layer of first tab, and the second thickness t2 of the second tabs represents the thickness of a single layer of second tab. The thicker the single layer of tab, the thicker the tab stacking structure formed after stacking. For an embodiment of the battery cell where the first thickness t1 is less than the second thickness t2, by ensuring that the third minimum distance L3 is greater than or equal to the fourth minimum distance L4, the thicknesses of the first tab stacking structure and the second tab stacking structure can be made closer. This helps reduce the risk of burning or scorching of the spacer portion caused by differences in welding heat when forming the weld pool.

In some embodiments, in the first direction, there is a third minimum distance L3 between the bending position of the plurality of first tabs and a tab top of the plurality of first tabs, and there is a fourth minimum distance L4 between the bending position of the plurality of second tabs and a tab top of the plurality of second tabs; and a first thickness t1 of the plurality of first tabs in a thickness direction of the first tabs is greater than a second thickness t2 of the plurality of second tabs in a thickness direction of the second tabs, with the third minimum distance L3 being less than or equal to the fourth minimum distance L4.

The third minimum distance L3 and the fourth minimum distance L4 respectively represent the lengths of the first tabs and the second tabs that are bent and involved in stacking. The longer the lengths of the tabs involved in stacking, the higher the degree of tab overlap. The first thickness t1 of the first tabs represents the thickness of a single layer of first tab, and the second thickness t2 of the second tabs represents the thickness of a single layer of second tab. The thicker the single layer of tab, the thicker the tab stacking structure formed after stacking. For an embodiment of the battery cell where the first thickness t1 is greater than the second thickness t2, by ensuring that the third minimum distance L3 is less than or equal to the fourth minimum distance L4, the thicknesses of the first tab stacking structure and the second tab stacking structure can be made closer. This helps reduce the risk of burning or scorching of the spacer portion caused by differences in welding heat when forming the weld pool.

In some embodiments, a ratio A/B of a product A of the first thickness t1 of the plurality of first tabs in the thickness direction of the first tabs and the third minimum distance L3 to a product B of the second thickness t2 of the plurality of second tabs in the thickness direction of the second tabs and the fourth minimum distance L4 satisfies 0.2≤A/B≤4, with the first thickness t1, the second thickness t2, the third minimum distance L3, and the fourth minimum distance L4 having the same unit.

The product A of the first thickness t1 and the third minimum distance L3 represents the stacking thickness of the first tab stacking structure, while the product B of the second thickness t2 and the fourth minimum distance L4 represents the stacking thickness of the second tab stacking structure. The ratio of the product A to the product B reflects the degree of difference in stacking thickness between the first tab stacking structure and the second tab stacking structure. If the ratio A/B is too large, the first tab stacking structure is relatively thicker, requiring higher welding power during welding and thus generating more welding heat, which increases the risk of burning or scorching of the spacer portion corresponding to the first tab stacking structure compared to the second tab stacking structure. Conversely, if the ratio A/B is too small, the second tab stacking structure is relatively thicker, requiring higher welding power during welding and thus generating more welding heat, which increases the risk of burning or scorching of the spacer portion corresponding to the second tab stacking structure compared to the first tab stacking structure. Therefore, by ensuring that the ratio A/B satisfies 0.2 ≤ A/B ≤ 4, the difference in stacking thickness between the first tab stacking structure and the second tab stacking structure is reduced, thereby lowering the risk of burning or scorching of the spacer portions corresponding to the first tab stacking structure and the second tab stacking structure.

In some embodiments, the ratio A/B satisfies 0.5≤A/B≤2.

By further limiting the ratio A/B to satisfy 0.5 ≤ A/B ≤ 2, the difference in stacking thickness between the first tab stacking structure and the second tab stacking structure can be further reduced, thereby more effectively lowering the risk of burning or scorching of the spacer portions corresponding to the first tab stacking structure and the second tab stacking structure.

In some embodiments, a ratio A/B of a product A of the first thickness t1 of the plurality of first tabs in the thickness direction of the first tabs and the third minimum distance L3 to a product B of the second thickness t2 of the plurality of second tabs in the thickness direction of the second tabs and the fourth minimum distance L4 satisfies A/B<1, with the first thickness t1, the second thickness t2, the third minimum distance L3, and the fourth minimum distance L4 having the same unit, and a third thickness t3 of the first conductive member in the first direction is less than a fourth thickness t4 of the second conductive member in the first direction.

The product A of the first thickness t1 and the third minimum distance L3 represents the stacking thickness of the first tab stacking structure, while the product B of the second thickness t2 and the fourth minimum distance L4 represents the stacking thickness of the second tab stacking structure. For an embodiment of the battery cell where the product A is less than the product B, the second tab stacking structure with a greater stacking thickness requires higher welding power for welding. However, fluctuations in higher laser power can easily result in the formation of an overly deep weld pool, increasing the risk of burning or scorching of the spacer. Therefore, a thicker second conductive member is adopted to improve the tolerance of welding, reducing the likelihood of forming an overly deep weld pool, thereby lowering the risk of burning or scorching of the spacer portion corresponding to the second tab stacking structure. On the other hand, the thinner first conductive member, paired with the first tab stacking structure with a smaller stacking thickness, allows for welding using lower welding power. Accordingly, it is easier to form a weld pool with an appropriate depth, thereby reducing the risk of burning or scorching of the spacer portion corresponding to the first tab stacking structure.

In some embodiments, a ratio A/B of a product A of the first thickness t1 of the plurality of first tabs in the thickness direction of the first tabs and the third minimum distance L3 to a product B of the second thickness t2 of the plurality of second tabs in the thickness direction of the second tabs and the fourth minimum distance L4 satisfies A/B>1, with the first thickness t1, the second thickness t2, the third minimum distance L3, and the fourth minimum distance L4 having the same unit, and a third thickness t3 of the first conductive member in the first direction is greater than a fourth thickness t4 of the second conductive member in the first direction.

The product A of the first thickness t1 and the third minimum distance L3 represents the stacking thickness of the first tab stacking structure, while the product B of the second thickness t2 and the fourth minimum distance L4 represents the stacking thickness of the second tab stacking structure. For an embodiment of the battery cell where the product B is less than the product A, the first tab stacking structure with a greater stacking thickness requires higher welding power for welding. However, fluctuations in higher laser power can easily result in the formation of an overly deep weld pool, increasing the risk of burning or scorching of the spacer. Therefore, a thicker first conductive member is adopted to improve the tolerance of welding, reducing the likelihood of forming an overly deep weld pool, thereby lowering the risk of burning or scorching of the spacer portion corresponding to the first tab stacking structure. On the other hand, the thinner second conductive member, paired with the second tab stacking structure with a smaller stacking thickness, allows for welding using lower welding power. Accordingly, it is easier to form a weld pool with an appropriate depth, thereby reducing the risk of burning or scorching of the spacer portion corresponding to the second tab stacking structure.

In some embodiments, in the first direction, the first tab stacking structure and the second tab stacking structure are both positioned at end portions on the same side of the winding structure.

The plurality of first tabs and the plurality of second tabs can be distributed on the same end of the winding structure, and the bent and stacked first tab stacking structure and second tab stacking structure can be within different angular ranges of the end portion on this side. Accordingly, the first conductive member and the second conductive member are also arranged on the same side of the winding structure and are respectively welded to the first tab stacking structure and the second tab stacking structure.

In some embodiments, in the first direction, the first tab stacking structure and the second tab stacking structure are respectively positioned at end portions on two opposite sides of the winding structure.

The plurality of first tabs and the plurality of second tabs can be distributed at two opposite ends of the winding structure, and the bent and stacked plurality of first tabs and plurality of second tabs respectively form the first tab stacking structure and the second tab stacking structure at the two ends of the winding structure. Accordingly, the first conductive member and the second conductive member are also respectively arranged on the two sides of the winding structure and are respectively welded to the first tab stacking structure and the second tab stacking structure.

In some embodiments, the battery cell further includes: a shell having a chamber for accommodating the electrode assembly, the first conductive member, and the second conductive member; and an electrode terminal disposed on a wall portion of the shell and electrically connected to the first conductive member or the second conductive member.

The first tab stacking structure and the second tab stacking structure of the electrode assembly that are formed at the end portions of the winding structure are respectively welded to the first conductive member and the second conductive member, and are electrically connected to the electrode terminals provided on the wall portion of the shell through the first or second conductive member. Due to the greater thickness of the stacked multi-layer tab structure, it is less likely to be welded through during welding with the conductive member, thereby reducing the risk of burning or scorching the spacer in the electrode assembly during welding. This improves the welding quality in the welding area and enhances the safety of use.

In some embodiments, the shell includes a case and an end cover, the case having an opening at an end, with the end cover covering the opening, and the case including a side wall and a bottom wall, where the side wall surrounds the outer side of the electrode assembly and the bottom wall is disposed opposite to the opening, with the wall portion of the shell being either the end cover or the bottom wall.

The first tab stacking structure and the second tab stacking structure of the electrode assembly that are formed at the end portions of the winding structure are respectively welded to the first conductive member and the second conductive member, and are electrically connected to the electrode terminals provided on the end cover or on the bottom wall of the case through the first or second conductive member, thereby effectively reducing the risk of burning or scorching the spacer in the electrode assembly during welding. This improves the welding quality in the welding area and enhances the safety of use.

In some embodiments, the first electrode plate further includes a first current collector substrate, with the plurality of first tabs connected to the first current collector substrate and arranged at intervals along the winding direction, and in the first direction, the bending position of the plurality of first tabs being positioned on a side of the spacer that is away from the first current collector substrate; and the second electrode plate further includes a second current collector substrate, with the plurality of second tabs connected to the second current collector substrate and arranged at intervals along the winding direction, and in the first direction, the bending position of the plurality of second tabs being positioned on a side of the spacer that is away from the second current collector substrate.

The plurality of first tabs connected to the first current collector substrate and arranged at intervals along the winding direction are at least partially bent at an end portion of the winding structure to form a compact first tab stacking structure of a certain thickness, which can be welded to the first conductive member to achieve reliable electrical connection. Similarly, the plurality of second tabs connected to the second current collector substrate and arranged at intervals along the winding direction are at least partially bent at an end portion of the winding structure to form a compact second tab stacking structure of a certain thickness, which can be welded to the second conductive member to achieve reliable electrical connection.

In an aspect of the present disclosure, a battery is provided, including the aforementioned battery cell.

The battery adopting the aforementioned battery cell can effectively enhance the safety of use.

In an aspect of the present disclosure, an electrical apparatus is provided, including the aforementioned battery.

The electrical apparatus adopting the aforementioned battery can effectively enhance the safety of use.

### BRIEF DESCRIPTION OF DRAWINGS

In order to more clearly illustrate the technical solutions of the embodiments of the present disclosure, the drawings to be used in the description of the embodiments of the present disclosure will be described briefly below. Obviously, the drawings in the following description are merely some embodiments of the present disclosure. For those skilled in the art, other drawings can also be obtained according to these drawings without any creative effort.

The present disclosure can be more clearly understood from the following detailed description with reference to the accompanying drawings, in which:
FIG. 1 is a schematic structural diagram of some embodiments of an electrical apparatus according to the present disclosure;
FIG. 2 is an exploded schematic diagram of some embodiments of a battery according to the present disclosure;
FIG. 3 is a schematic diagram of the connection of a plurality of battery cells in some embodiments of the battery according to the present disclosure;
FIG. 4 is an exploded schematic diagram of some embodiments of a battery cell according to the present disclosure;
FIG. 5 is a longitudinal sectional schematic diagram taken along the winding axis CL in some embodiments of the battery cell according to the present disclosure;
FIG. 6 is a cross-sectional schematic diagram of a winding structure in some embodiments of an electrode assembly according to the present disclosure;
FIG. 7 is an exploded schematic diagram of the electrode assembly and conductive members in some embodiments of the battery cell according to the present disclosure;
FIG. 8 is an exploded schematic diagram of the electrode assembly and conductive members in some other embodiments of the battery cell according to the present disclosure;
FIGS. 9 and 10 are respectively a schematic diagram of the assembly structure and a cross-sectional schematic diagram of the conductive member shown in FIG. 8;
FIG. 11 is a schematic diagram of electrode plates and tabs in an unfolded state in some embodiments of the electrode assembly according to the present disclosure;
FIG. 12 is a schematic diagram of electrode plates and tabs in an unfolded state in some other embodiments of the electrode assembly according to the present disclosure; and
FIG. 13 is a sectional schematic diagram of the structure in which tab stacking structures are welded to conductive members in some embodiments of the electrode assembly according to the present disclosure.

It should be understood that the dimensions of various parts shown in the drawings are not drawn to actual scale. In addition, the same or similar reference signs indicate the same or similar members.

Description of reference numerals:
10 - electrode assembly; 11 - first electrode plate; 11A - first current collector substrate; 11B - first tabs; 11C - first active material layer; 111 - first tab stacking structure; 11f - bending position of the first tabs; 11r - cutting root of the first tabs; 11t - tab top of the first tabs; 12 - second electrode plate; 12B - second tabs; 12C - second active material layer; 121 - second tab stacking structure; 12f - bending position of the second tabs; 12r - cutting root of the second tabs; 12t - tab top of the second tabs; 13 - spacer; 100 - winding structure;
21 - first conductive member; 22 - second conductive member; 23 - second insulating member;
30 - battery cell; 31 - shell; 311 - case; 311B - side wall; 311C - bottom wall; 311A - opening; 311D - through hole; 312 - end cover; 32 - electrode terminal; 33 - first insulating member; 34 - electrode lead-out portion; 35 - pressure relief component;
40 - battery; 41 - box body; 42 - box cover; 43 - busbar;
50 - vehicle;
wd - winding direction; CL - winding axis; d1 - first direction; d2 - second direction.

### DETAILED DESCRIPTION

Implementations of the present disclosure are described in further detail below in conjunction with the drawings and embodiments. The following detailed description of the embodiments and the drawings are configured to illustrate the principles of the present disclosure by way of example, but should not be configured to limit the scope of the present disclosure, that is, the present disclosure is not limited to the described embodiments.

In the description of the present disclosure, it should be noted that, unless otherwise stated, "plurality of" means two or more; the orientation or positional relationships indicated by the terms "upper", "lower", "left", "right", "inner" and "outer" are only for facilitating the description of the present disclosure and simplifying the description, rather than indicating or implying that the apparatus or element referred to must have a particular orientation or be constructed and operated in a particular orientation, and therefore will not be interpreted as limiting the present disclosure. In addition, the terms "first", "second" and "third" are used for descriptive purposes only, and cannot be construed as indicating or implying relative importance. "Perpendicular" is not strictly perpendicular, but within the allowable range of errors. "Parallel" is not strictly parallel, but within the allowable range of errors.

Orientation words appearing in the following description are all directions shown in the drawings, and do not limit the specific structure of the present disclosure. In the description of the present disclosure, it should also be noted that, unless otherwise expressly specified and limited, the terms "mount," "connected," and "connecting" should be broadly understood, for example, they may be a fixed connection or a detachable connection or be an integrated connection; or may be a direct connection or an indirect connection through an intermediate medium. For those of ordinary skill in the art, the specific meanings of the terms mentioned above in the present disclosure should be construed according to specific circumstances.

Some implementations of the present invention will be further described in detail below with reference to the drawings. In the case of no conflict, the features of the embodiments describe below can be combined with each other.

In the present disclosure, the phrase "a plurality of" means two or more.

In the embodiments of the present disclosure, the battery cell may be a secondary battery. The secondary battery refers to a battery cell that can be charged to activate the active material and continue to be used after the battery cell is discharged.

The battery cell may be a lithium-ion battery, a sodium-ion battery, a sodium/lithium-ion battery, a lithium metal battery, a sodium metal battery, a lithium-sulfur battery, a magnesium-ion battery, a nickel-metal hydride battery, a nickel-cadmium battery, or a lead storage battery, etc., which is not limited in the embodiments of the present application.

The battery cell includes an electrode assembly. The electrode assembly includes a first electrode plate and a second electrode plate with opposite polarities, as well as a spacer disposed between the first electrode plate and the second electrode plate. In some embodiments, the first electrode plate is a positive electrode plate, and the second electrode plate is a negative electrode plate. In some other embodiments, the first electrode plate is a negative electrode plate, and the second electrode plate is a positive electrode plate. During charging and discharging of the battery cell, active ions (e.g., lithium ions) are intercalated and deintercalated back and forth between the positive electrode plate and the negative electrode plate. The spacer is arranged between the positive electrode plate and the negative electrode plate, and can function to prevent a short circuit between the positive electrode and the negative electrode, while allowing active ions to pass through.

In some implementations, the positive electrode plate may include a positive electrode current collector substrate and a positive electrode active material layer disposed on at least one surface of the positive electrode current collector substrate.

As an example, the positive electrode current collector substrate has two surfaces opposite in its own thickness direction, and the positive electrode active material layer is arranged on either one or both of the two opposite surfaces of the positive electrode current collector substrate.

As an example, the positive electrode current collector substrate can be made of a metal foil or a composite current collector. For example, silver surface-treated aluminum or stainless steel, stainless steel, copper, aluminum, nickel, carbon electrode, carbon, nickel, titanium, or the like may be used as the metal foil. The composite current collector may include a high molecular material substrate layer and a metal layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

As an example, the positive electrode active material layer may include at least one of the following materials: a lithium-containing phosphate, a lithium transition metal oxide, and a respective modified compound thereof. However, the present disclosure is not limited to these materials, and other conventional materials useful as positive electrode active material layers for batteries can also be used. These positive electrode active material layers may be used alone or in combination of two or more thereof. Examples of lithium-containing phosphates may include, but are not limited to, at least one of lithium iron phosphate (e.g., LiFePO₄ (also abbreviated as LFP)), lithium iron phosphate-carbon composite, lithium manganese phosphate (e.g., LiMnPO₄), lithium manganese phosphate-carbon composite, lithium iron manganese phosphate, and lithium iron manganese phosphate-carbon composite. Examples of the lithium transition metal oxide may include, but are not limited to, at least one of a lithium-cobalt oxide (such as LiCoO₂), lithium-nickel oxide (such as LiNiO₂), lithium-manganese oxide (such as LiMnO₂ and LiMn₂O₄), lithium-nickel-cobalt oxide, lithium-manganese-cobalt oxide, lithium-nickel-manganese oxide, lithium-nickel-cobalt-manganese oxide (such as LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁), lithium-nickel-cobalt-aluminum oxide (such as LiNi_{0.85}Co_{0.15}Al_{0.05}O₂) and their respective modified compounds.

In some implementations, the negative electrode plate may include a negative electrode current collector substrate.

As an example, the negative electrode current collector substrate can be made of a metal foil, metal foam, or composite current collector. For example, silver surface-treated aluminum or stainless steel, stainless steel, copper, aluminum, nickel, carbon electrode, carbon, nickel, titanium, or the like may be used as the metal foil. The foam metal may be foam nickel, foam copper, foam aluminum, foam alloy, or foam carbon, etc. The composite current collector may include a high molecular material substrate layer and a metal layer. The composite current collector may be formed by forming a metal material (such as copper, copper alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

In some implementations, the negative electrode plate may include a negative electrode current collector substrate and a negative electrode active material layer disposed on at least one surface of the negative electrode current collector substrate.

As an example, the negative electrode current collector substrate has two surfaces opposite in its own thickness direction, and the negative electrode active material layer is arranged on either one or both of the two opposite surfaces of the negative electrode current collector substrate.

As an example, the negative electrode active material layer may use a negative electrode active material layer commonly known in the field for use in battery cells. As an example, the negative electrode active material layer may include at least one of the following materials: artificial graphite, natural graphite, soft carbon, hard carbon, silicon-based material, tin-based material, lithium titanate, and the like. The silicon-based material may be selected from at least one of elemental silicon, silicon-oxygen compound, silicon-carbon complex, silicon-nitrogen complex, and silicon alloy. The tin-based material may be selected from at least one of elemental tin, tin-oxygen compound, and tin alloy. However, the present disclosure is not limited to these materials, and other conventional materials useful as negative electrode active material layers for batteries can also be used. These negative electrode active material layers may be used alone or in a combination of two or more thereof.

In some implementations, the material of the positive electrode current collector substrate may be aluminum, and the material of the negative electrode current collector substrate may be copper.

In some implementations, the spacer is a separator. The type of the separator is not particularly limited in the present disclosure and any well-known separator having good chemical stability, mechanical stability, and a porous structure may be selected.

As an example, the primary material of the separator may be selected from at least one of glass fiber, non-woven fabric, polyethylene, polypropylene, polyvinylidene fluoride, or ceramic. The separator may be a single-layer film, or may be a multi-layer composite film, which is not particularly limited. When the separator is a multi-layer composite film, the material in each layer may be same or different, which is not particularly limited. The spacer may be a separate component positioned between the positive electrode plate and the negative electrode plate, or it may be positioned between the positive electrode plate and the negative electrode plate while being attached to the surface of the positive electrode plate and/or the surface of the negative electrode plate.

In some implementations, the spacer is a solid electrolyte. The solid electrolyte is arranged between the positive electrode plate and the negative electrode plate, and functions to transport ions and isolate the positive electrode from the negative electrode.

In some implementations, the battery cell further includes an electrolyte that functions to conduct ions between the positive electrode and the negative electrode. The type of the electrolyte is not specifically limited in the present disclosure, and may be selected according to needs. The electrolyte may be in a liquid state, a gel state, or a solid state.

As an example, the liquid electrolyte includes an electrolyte salt and a solvent.

In some implementations, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalate)borate, lithium difluorobis(oxalato)phosphate, and lithium tetrafluoro(oxalato)phosphate.

In some implementations, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone. An ether solvent may also be used as the solvent. The ether solvent may include one or more selected from the group consisting of ethylene glycol dimethyl ether, ethylene glycol diethyl ether, diethylene glycol dimethyl ether, tridiethylene glycol dimethyl ether, tetraethylene glycol dimethyl ether, 1,3-dioxolane, tetrahydrofuran, methyltetrahydrofuran, diphenyl ether, or crown ether.

As an example, the gel electrolyte includes a skeleton network with a polymer as the electrolyte, paired with an ionic liquid-lithium salt.

As an example, the solid electrolyte includes a polymer solid electrolyte, an inorganic solid electrolyte, and a composite solid electrolyte.

As an example, the polymer solid electrolyte may be a polyether (polyoxyethylene), polysiloxane, polycarbonate, polyacrylonitrile, polyvinylidene fluoride, polymethyl methacrylate, monoionic polymer, polyionic liquid-lithium salt, or cellulose, etc.

As an example, the inorganic solid electrolyte may be one or more of an oxide solid electrolyte (crystalline perovskite, sodium superionic conductor, garnet, amorphous LiPON film), a sulfide solid electrolyte (a crystalline lithium superionic conductor (lithium germanium phosphorus sulfide and argyrodite), amorphous sulfide), a halide solid electrolyte, a nitride solid electrolyte, and a hydride solid electrolyte.

As an example, a composite solid electrolyte is formed by adding an inorganic solid electrolyte filler into a polymer solid electrolyte.

In some implementations, the electrode assembly includes a winding structure. The positive electrode plate, the negative electrode plate, and the spacer are wound into a winding structure. One or more positive electrode plates and one or more negative electrode plates may be provided, respectively. As an example, a plurality of positive electrode plates and a plurality of negative electrode plates are alternately arranged along the thickness direction of the electrode plates.

In some implementations, the shape of the electrode assembly may be a cylinder, flat, or a polygonprism, etc.

In some implementations, the positive electrode plate includes positive tabs, and the negative electrode plate includes negative tabs. The positive tabs and the negative tabs can be used to conduct current out of the electrode assembly. The positive tabs and the negative tabs are respectively connected to the positive electrode current collector substrate and the negative electrode current collector substrate. The tabs may be formed by trimming or cutting the current collector substrates or may be connected to the sides of the current collector substrates by means of welding.

In some implementations, the battery cell may include a shell. The shell is configured to encapsulate components, such as the electrode assembly and electrolyte. The shell may be a steel shell, an aluminum shell, a plastic shell (such as polypropylene), a composite metal shell (such as a copper-aluminum composite shell), an aluminum-plastic film, or the like.

As an example, the battery cell may be a cylindrical battery cell, a prismatic battery cell, a pouch cell, or a battery cell in another shape. The prismatic battery cell includes a square-shell battery cell, a blade-shaped battery cell, and a multi-prism battery. For example, the multi-prism battery may be a hexagonal prism battery.

The battery mentioned in the embodiments of the present disclosure refers to a single physical module including one or more battery cells to provide a higher voltage and capacity.

In some embodiments, the battery may be a battery module. When there are a plurality of battery cells, the plurality of battery cells are arranged and fixed to form a battery module. The battery module may include a plurality of battery cells connected in series, in parallel or in a hybrid connection.

In some embodiments, the battery may be a battery pack. The battery pack comprises a box body and a battery cell. The battery cell or the battery module is accommodated in the box body.

In some embodiments, the box body may be a part of a vehicle chassis structure. For example, a part of the box body may become at least a part of a vehicle floor, or a part of the box body may become at least a part of a cross beam and a longitudinal beam of a vehicle.

In some embodiments, the battery may be an energy storage apparatus. The energy storage apparatus includes an energy storage container, or an energy storage cabinet, etc.

In some related art, an electrode plate in the electrode assembly is primarily composed of a current collector substrate and an active material layer disposed on the surface of the current collector substrate. In the width direction of the electrode plate, the portion of the current collector substrate that extends beyond the active material layer serves as a busbar output area. This area is cut to obtain a plurality of small-sized tabs located at the side edge of the current collector substrate, with cut breaks provided between adjacent tabs to ensure that the tabs are independent from each other.

These small tabs are bent and flattened at an end of the wound electrode assembly to form a dense tab stacking structure. When the tab stacking structure is welded to the current collector plate by laser or other methods, the heat generated by the tab stacking structure may scorch the spacer in contact with the tabs through heat conduction. This can lead to damage and failure of the spacer, thus affecting the product yield and the safety of use.

In view of this, an embodiment of the present disclosure provides a battery cell, including an electrode assembly, a first conductive member, and a second conductive member. The electrode assembly includes a first electrode plate, a second electrode plate, and a spacer, where the first electrode plate and the second electrode plate have opposite polarities, the spacer is positioned between the first electrode plate and the second electrode plate, and the first electrode plate, the second electrode plate, and the spacer are wound along a winding direction to form a winding structure, with the first electrode plate including a plurality of first tabs that are bent at an end portion of the winding structure to form a first tab stacking structure, and the second electrode plate including a plurality of second tabs that are bent at an end portion of the winding structure to form a second tab stacking structure; a first conductive member welded to the first tab stacking structure; and a second conductive member welded to the second tab stacking structure, where in a first direction parallel to an extension direction of a winding axis of the winding structure, there is a gap between the spacer and at least one of a bending position of the plurality of first tabs and a bending position of the plurality of second tabs in the first direction.

The plurality of first tabs and the plurality of second tabs are bent at end portions of the winding structure to form the first tab stacking structure and the second tab stacking structure, respectively. By ensuring that there is a gap between the spacer and at least one of the bending position of the plurality of first tabs and the bending position of the plurality of second tabs in the first direction, the risk of the spacer being scorched by heat that is generated from the tabs and conducted to the spacer during the welding of the tab stacking structures to the conductive members can be reduced, thereby improving the product yield and the safety of use.

The battery cell of the embodiment of the present disclosure can be applied to various types of batteries. The battery may include a box body and a battery module, where the box body is used to provide an accommodation space for the battery module, and the battery module is installed within the box body. The box body may be made of a metal material. The battery module may include a plurality of battery cells connected in series, in parallel or in a hybrid connection. The battery cell is the smallest unit constituting a battery. The battery cell includes an electrode assembly that enables an electrochemical reaction to occur.

The battery of the embodiment of the present disclosure can be applied to various types of electrical apparatuses that use batteries. The electrical apparatus may be, for example, a mobile phone, a portable device, a laptop, an electric motorcycle, an electric vehicle, a ship, a spacecraft, an electric toy, or an electric tool. For example, the spacecraft includes an airplane, a rocket, a space shuttle, or a spaceship. The electric toy includes a fixed or mobile electric toy, such as a game console, an electric vehicle toy, an electric ship toy, and an electric airplane toy. The electric tool includes an electric tool for metal cutting, an electric tool for grinding, an electric tool for assembling and an electric tool for railways, such as an electric drill, an electric grinder, an electric wrench, an electric screwdriver, an electric hammer, an electric impact drill, a concrete vibrator, and an electric planer. The electrical apparatus is not specially limited in the embodiments of the present disclosure. The battery can be used to power an electrical apparatus, such as a vehicle, for example, supplying power for control operations or driving propulsion for the vehicle.

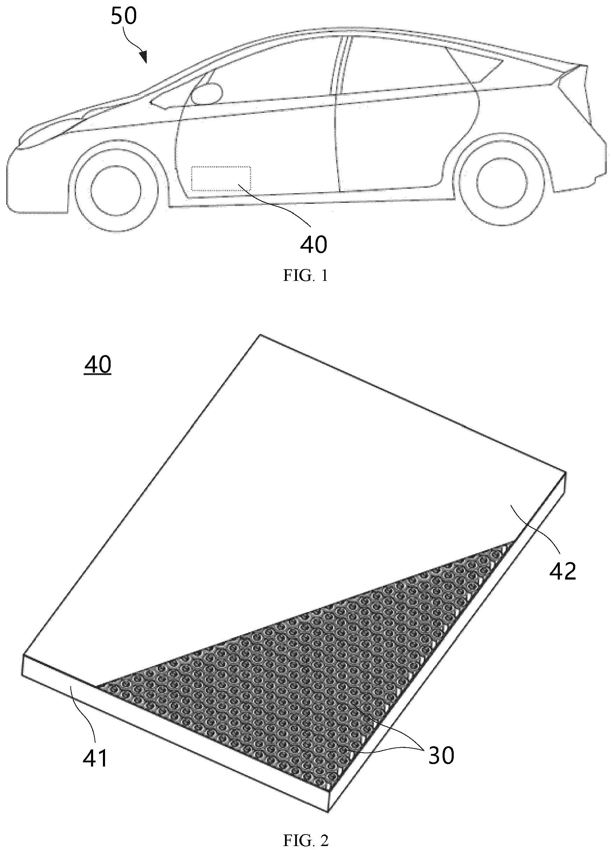

FIG. 1 is a schematic structural view of some embodiments of an electrical apparatus according to the present disclosure. For the convenience, an example in which the electrical apparatus is a vehicle is taken for description. The vehicle 50 may be a fuel vehicle, a gas vehicle or a new energy vehicle. The new energy vehicle may be an all-electric vehicle, a hybrid electric vehicle, etc. The battery 40 may be arranged at the bottom or the head or the tail of the vehicle 50.

The battery 40 may be configured to supply power to the vehicle 50. For example, the battery 40 can serve as an operating power supply of the vehicle 50 for use in a circuit system of the vehicle 50, for example, to meet a working power demand of the vehicle 50 during startup, navigation and running. The battery 40 may not only be used as the operating power source of the vehicle 50, but also may be used as a driving power source of the vehicle 50 to provide driving force for the vehicle 50 in place of or partially in place of fuel or natural gas.

The interior of the vehicle 50 may further be provided with axles, wheels, a motor, and a controller, where the controller is used to control the power supply from the battery 40 to the motor. For example, when the vehicle 50 uses the battery 40 as the driving power source, the battery 40 replaces or partially replaces fuel or natural gas to provide the necessary power for the motor to maintain a constant speed or accelerate. The motor is used to drive the axle to rotate, so as to drive the wheels to rotate.

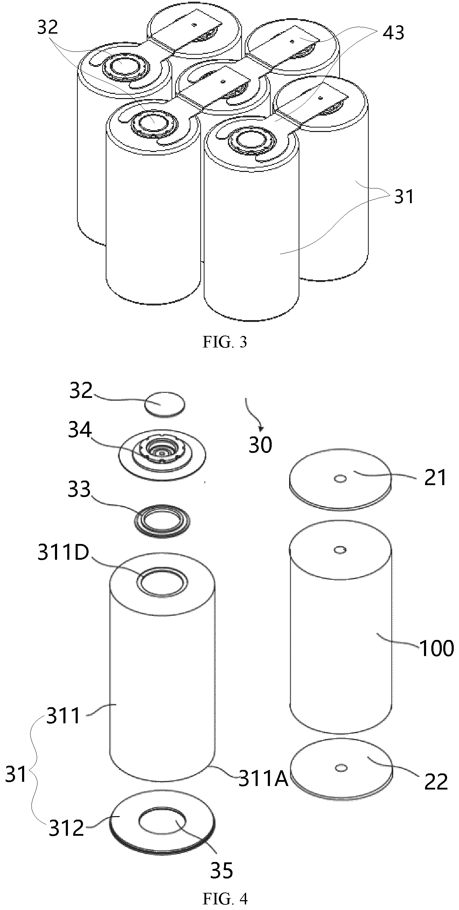

FIG. 2 is an exploded schematic diagram of some embodiments of a battery according to the present disclosure. FIG. 3 is a schematic diagram of the connection of a plurality of battery cells in some embodiments of the battery according to the present disclosure.

With reference to FIG. 2, in some embodiments, the battery 40 includes a box body 41, a box cover 42 that covers the opening side of the box body 41, and one or more battery cells 30 disposed within the box body 41. The box body 41 and the box cover 42 can provide an accommodation space for the battery cells 30 and offer functions such as cooling, sealing, and impact resistance, and are also capable of preventing unfavorable effects on the charging and discharging or safety of the battery cells caused by liquids or other foreign objects.

The box body 41 and the box cover 42 may be of various shapes, such as cuboids or cylinders. The box body 41 may be of a hollow structure with an open side, and the box cover 42 is of a plate-like structure. When the box cover 42 covers the open side of the box body 41, an internal accommodation space is formed. In another embodiment, the box body 41 is of a hollow structure with an open side, and the box cover 42 is also of a hollow structure an open side. The open side of the box cover 42 covers the open side of the box body 41, thereby forming an internal accommodating space.

With reference to FIGS. 2 and 3, the battery cells 30 are electrically connected to each other, such as in series, in parallel, or in a hybrid connection, to achieve the desired electrical performance parameters of the battery 40. The hybrid connection refers to a connection in which some of the plurality of battery cells 30 are connected in series while others are connected in parallel. Adjacent battery cells 30 can be electrically connected via busbars 43. The plurality of battery cells 30 are arranged in rows, and one or more rows of battery cells 30 can be arranged within the box body 41 as needed.

In some embodiments, the battery cells 30 of the battery 40 can be arranged along at least one of the length direction and the width direction of the box body 41. At least one row or column of battery cells 30 can be provided depending on actual needs. If necessary, one or more layers of battery cells 30 may also be provided in the height direction of the battery 40.

In some embodiments, the plurality of battery cells 30 may be connected in series or in parallel or in a hybrid connection first to form a plurality of battery modules, which may then be connected in series or in parallel or in a hybrid connection to form a whole that is accommodated in the box body 41. In some other embodiments, all the battery cells 30 are directly connected in series or in parallel or in a hybrid connection, and then an entirety composed of all the battery cells 30 is accommodated in the box body.

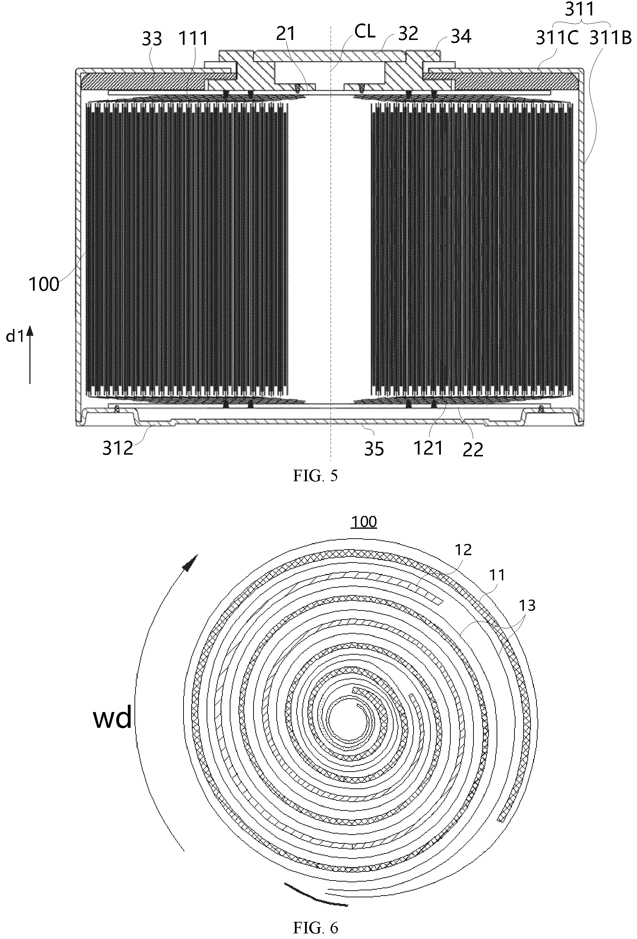

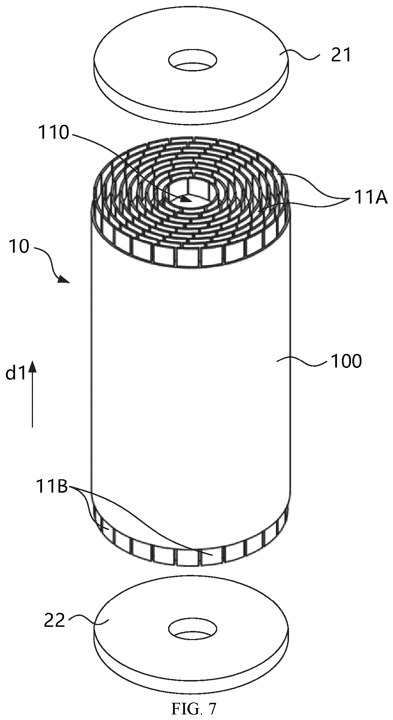

FIG. 4 is an exploded schematic diagram of some embodiments of a battery cell according to the present disclosure. FIG. 5 is a longitudinal sectional schematic diagram taken along the winding axis CL in some embodiments of the battery cell according to the present disclosure. FIG. 6 is a cross-sectional schematic diagram of a winding structure in some embodiments of an electrode assembly according to the present disclosure. FIG. 7 is an exploded schematic diagram of the electrode assembly and conductive members in some embodiments of the battery cell according to the present disclosure.

With reference to FIGS. 3 to 7, in some embodiments, the battery cell 30 includes an electrode assembly 10, a first conductive member 21, and a second conductive member 22. The electrode assembly 10 includes a first electrode plate 11, a second electrode plate 12, and a spacer 13, where the first electrode plate 11 and the second electrode plate 12 have opposite polarities, the spacer 13 is positioned between the first electrode plate 11 and the second electrode plate 12, and the first electrode plate 11, the second electrode plate 12, and the spacer 13 are wound along a winding direction wd to form a winding structure 100.

In FIG. 6, the electrode plate winding loops formed by the first electrode plate 11 and the second electrode plate 12 in the winding structure 100 can be arranged at least partially in an alternating pattern from the outside to the inside. The spacer 13 may be provided in the form of a separator between the first electrode plate 11 and the second electrode plate 12.

The first electrode plate 11 may include a first current collector substrate 11A and a plurality of first tabs 11B, where the plurality of first tabs 11B are connected to the first current collector substrate 11A and arranged at intervals along the winding direction wd, and the plurality of first tabs 11B are at least partially bent at an end portion of the winding structure 100 to form a first tab stacking structure 111.

The second electrode plate 12 may include a second current collector substrate 12A and a plurality of second tabs 12B, where the plurality of second tabs 12B are connected to the second current collector substrate 12A and arranged at intervals along the winding direction wd, and the plurality of second tabs 12B are at least partially bent at an end portion of the winding structure 100 to form a second tab stacking structure 121.

The first conductive member 21 is welded to the first tab stacking structure 111, and the second conductive member 22 is welded to the second tab stacking structure 121. The welding of the conductive members to the tab stacking structures can be performed using laser or other means. Accordingly, the welding area takes the form of a liquid metal portion that has melted into a certain geometric shape due to heating, which is referred to as the weld pool.

With reference to FIGS. 4 and 5, in some embodiments, the battery cell 30 may further include: a shell 31 and an electrode terminal 32. The shell 31 has a chamber for accommodating the electrode assembly 10, the first conductive member 21, and the second conductive member 22. The electrode terminal 32 is disposed on a wall portion of the shell 31 and electrically connected to the first conductive member 21 or the second conductive member 22.

The cavity of the shell 31 can accommodate not only the electrode assembly 10 but also the electrolyte. The shape of the shell 31 can be determined based on the shape of one or more electrode assemblies 10 accommodated within the cavity. For example, the shell 31 may be in the shape of a hollow cuboid, a hollow cube, or a hollow cylinder.

In FIGS. 4 and 5, the shell 31 may include a case 311 and an end cover 312. The case 311 is of a hollow structure with an opening 311A at one or both ends, and its material can be of one or more types, such as copper, iron, aluminum, steel, aluminum alloy, plastic, etc. The end cover 312 may be made of metal or non-metal materials and can be fixedly connected to the case 311 through connection methods such as welding, bonding, or fasteners.

The case 311 has an opening 311A at one end, and the end cover 312 covers the opening 311A. In FIG. 5, the case 311 may include a side wall 311B and a bottom wall 311C. The side wall 311B surrounds the outer side of the electrode assembly 10, and the bottom wall 311C is disposed opposite to the opening 311A. The wall portion of the shell 31 is either the end cover 312 or the bottom wall 311C. Accordingly, the electrode terminal 32 can be provided on the end cover 312 or on the bottom wall 311C.

For a cylindrical battery cell, the case 311 can be a cylindrical hollow structure with an opening 311A at one end, and the end cover 312 can be a disk-shaped structure that matches the opening 311A. The electrode terminal 32 can be provided on the bottom wall 311C of the case 311 that is on the side away from the end cover 312.

In FIG. 4, the bottom wall 311C may be provided with a through hole 311D. With reference to FIG. 5, the electrode terminal 32 may be provided on the through hole 311D via an electrode lead-out portion 34 and a first insulating member 33. The electrode lead-out portion 34 can at least partially protrude from the outer surface of the bottom wall 311C to facilitate electrical connection between different battery cells 30 via a busbar 43 (as shown in FIG. 3). The first insulating member 33 is used to insulate the electrode lead-out portion 34 from the case 311 and can be made of rubber or plastic materials. Optionally, openings are provided at both ends of the case, and both openings can be covered by end covers. The electrode lead-out portion and the electrode terminal can be disposed on the end covers.

With reference to FIGS. 4 and 5, a pressure relief component 35 may be provided on the end cover 312. The pressure relief component refers to an element or component that is actuated to relieve an internal pressure or heat when the internal pressure or temperature of the battery cell reaches a predetermined threshold. The threshold design varies according to different design requirements. The threshold may depend on the material of one or a plurality of the positive electrode plate, the negative electrode plate, the electrolyte solution, and the separator in the battery cell. The pressure relief component may take the form of an explosion-proof valve, a gas valve, a pressure relief valve, a safety valve, or the like, and may specifically adopt a pressure-sensitive or temperature-sensitive element or structure. That is, when the internal pressure or temperature of the battery cell reaches a predetermined threshold, the pressure relief component performs an action or a weak structure arranged in the pressure relief component is damaged, so as to form an opening or channel for releasing the internal pressure or temperature.

The emissions from the battery cell mentioned here include, but are not limited to: electrolyte, dissolved or fragmented positive and negative electrode plates, fragments of the separator, high-temperature and high-pressure gases generated from reactions (e.g., combustible gases such as CH₄ and CO), flames, and the like.

With reference to FIGS. 5 and 7, in some embodiments, in the first direction d1, the first tab stacking structure 111 and the second tab stacking structure 121 are respectively positioned at end portions on two opposite sides of the winding structure 100. For the cylindrical winding structure 100, the first direction d1 is parallel to the extension direction of the winding axis CL of the winding structure 100.

Correspondingly, the first conductive member 21 and the second conductive member 22 are positioned on two sides of the electrode assembly 10 along the first direction d1. They are respectively welded to the first tab stacking structure 111 and the second tab stacking structure 121 at the end portions on the two sides of the electrode assembly 10, and are respectively welded to the electrode lead-out portion 34 and the end cover 312. The first conductive member 21 and the second conductive member 22 can serve as current collectors to respectively realize the electrical connection between the electrode assembly 10 and the electrode terminal 32 and the electrical connection between the electrode assembly 10 and a structure such as the end cover 312.

At least one of the first conductive member 21 and the second conductive member 22 can be a metal conductor, such as copper, iron, aluminum, steel, or aluminum alloy. In some embodiments, at least one of the first conductive member 21 and the second conductive member 22 can include a current collector plate or other structures.

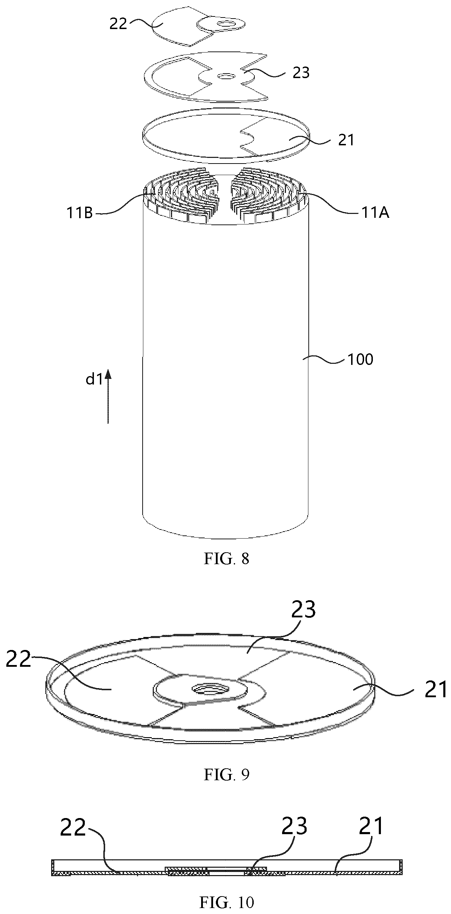

FIG. 8 is an exploded schematic diagram of the electrode assembly and conductive members in some other embodiments of the battery cell according to the present disclosure. FIGS. 9 and 10 are respectively a schematic diagram of the assembly structure and a cross-sectional schematic diagram of the conductive member shown in FIG. 8.

With reference to FIGS. 8, 9 and 10, in some embodiments, in the first direction d1, the first tab stacking structure 111 and the second tab stacking structure 121 are both positioned at end portions on the same side of the winding structure 100. Correspondingly, the plurality of first tabs 11B and the plurality of second tabs 12B can be distributed on the same end of the winding structure 100, and the bent and stacked first tab stacking structure 111 and second tab stacking structure 121 can be distributed within different angular ranges of the end portion on this side. The first conductive member 21 and the second conductive member 22 are both disposed on the same side of the winding structure 100 and are respectively welded to the first tab stacking structure 111 and the second tab stacking structure 121.

With reference to FIG. 8, the first conductive member 21 and the second conductive member 22 may both be fan-shaped, and to ensure insulation between the first conductive member 21 and the second conductive member 22, a second insulating member 23 can be provided at the end portion on this side of the winding structure. The first conductive member 21 and the second conductive member 22 are both assembled with the second insulating member 23, and the assembled structure shown in FIG. 8 is welded to the first tab stacking structure 111 and the second tab stacking structure 121.

With reference to FIGS. 9 and 10, the second insulating member 23 may be provided with a hollowed-out portion and an opening extending through in the first direction d1, where the opening is used to accommodate the first conductive member 21, and the hollowed-out portion is used to accommodate the second conductive member 22. The second insulating member 23 can be made of rubber or plastic materials.

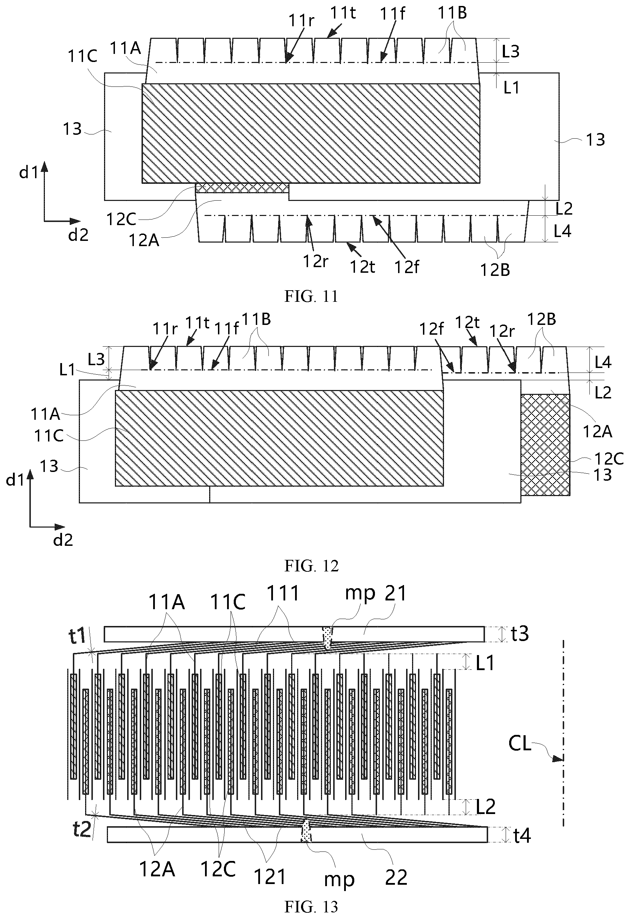

FIG. 11 is a schematic diagram of electrode plates and tabs in an unfolded state in some embodiments of the electrode assembly according to the present disclosure. FIG. 12 is a schematic diagram of electrode plates and tabs in an unfolded state in some other embodiments of the electrode assembly according to the present disclosure. FIG. 13 is a sectional schematic diagram of the structure in which tab stacking structures are welded to conductive members in some embodiments of the electrode assembly according to the present disclosure.

FIG. 11 corresponds to an embodiment where the plurality of first tabs 11B and the plurality of second tabs 12B are distributed at two opposite ends of the winding structure 100, while FIG. 12 corresponds to an embodiment where the plurality of first tabs 11B and the plurality of second tabs 12B are distributed at the same end of the winding structure 100. In FIGS. 11 and 12, the second direction d2 is parallel to the length direction of the first electrode plate 11 or the second electrode plate 12, which is also equivalent to the winding direction wd after unfolding. The first direction d1 is parallel to the winding axis CL of the winding structure 100 and also parallel to the width direction of the first electrode plate 11 or the second electrode plate 12.

With reference to FIGS. 11 and 12, in the first direction d1 parallel to the extending direction of the winding axis CL of the winding structure 100, a bending position 11f of the plurality of first tabs 11B is positioned on a side of the spacer 13 that is away from the first current collector substrate 11A, and a bending position 12f of the plurality of second tabs 12B is positioned on a side of the spacer 13 that is away from the second current collector substrate 12A.

In FIGS. 11 and 12, the bending positions of the first tabs 11B and the second tabs 12B are indicated by dash-dot lines. For embodiments where a plurality of tabs are cut from the current collector substrate using laser or other methods, the bending position 11f of the plurality of first tabs 11B can be a cutting root 11r of the plurality of first tabs 11B or a position closer to a tab top 11t of the first tabs 11B compared to the cutting root 11r of the first tabs 11B; and the bending position 12f of the plurality of second tabs 12B can be a cutting root 12r of the plurality of second tabs 12B or a position closer to a tab top 12t of the second tabs 12B compared to the cutting root 12r of the second tabs 12B.

The plurality of first tabs 11B are at least partially bent at an end portion of the winding structure 100 to form the first tab stacking structure 111, and the plurality of second tabs 12B are at least partially bent at an end portion of the winding structure 100 to form the second tab stacking structure 121.

The bending position 11f of the plurality of first tabs 11B may have a gap with the spacer 13 in the first direction d1. This can reduce the risk of heat generated by the first tab stacking structure during welding being conducted to the spacer 13 and causing the spacer 13 to be scorched. Correspondingly, the minimum distance in the first direction d1 between the bending position 11f of the plurality of first tabs 11B and the spacer 13 is defined as a first minimum distance L1.

The bending position 12f of the plurality of second tabs 12B can have a gap with the spacer 13 in the first direction d1. This can reduce the risk of heat generated by the second tab stacking structure during welding being conducted to the spacer 13 and causing the spacer 13 to be scorched. Correspondingly, the minimum distance in the first direction d1 between the bending position 12f of the plurality of second tabs 12B and the spacer 13 is defined as a second minimum distance L2.

When the bending position 11f of the plurality of first tabs 11B is a position where the tabs are cut on the portion of the first current collector substrate 11A that is uncovered by the first active material layer 11C, the first minimum distance L1 is the minimum distance in the first direction d1 between the cutting root 11r of the plurality of first tabs 11B and the spacer 13. When the bending position 12f of the plurality of second tabs 12B is a position where the tabs are cut on the portion of the current collector substrate that is uncovered by the active material layer, the second minimum distance L2 is the minimum distance in the first direction d1 between the cutting root 12r of the plurality of second tabs 12B and the spacer 13.

In some embodiments, the material of the plurality of first tabs 11B has a melting point lower than that of the material of the plurality of second tabs 12B, with the first minimum distance L1 being less than or equal to the second minimum distance L2. For example, when the first tabs 11B are made of aluminum with a melting point of 660°C and are made of copper at 1083°C, and the second tabs 12B are made of aluminum with a melting point of 660°C, the first minimum distance L1 can be set to be less than or equal to the second minimum distance L2 in this embodiment.

For an embodiment of the battery cell where the material of the first tabs 11B has a melting point lower than that of the material of the second tabs 12B, the material of the second tabs 12B with a higher melting point requires more welding heat to form a weld pool. Accordingly, the second tab stacking structure 121 generates more heat during welding. When the second tab stacking structure 121 generates more heat, there is a risk of the spacer 13 being burned by thermal radiation, even if it does not directly contact the second tab stacking structure 121. Therefore, by ensuring that the second minimum distance L2 is not less than the first minimum distance L1, the risk of the spacer 13 portion corresponding to the second tab stacking structure 121 being scorched, as well as the risk of the spacer 13 being burned by thermal radiation due to its proximity to the second tab stacking structure 121, can be reduced.

In some embodiments, the material of the plurality of first tabs 11B has a melting point higher than that of the material of the plurality of second tabs 12B, with the second minimum distance L2 being less than or equal to the first minimum distance L1. For example, when the first tabs 11B are made of copper at 1083°C, and the second tabs 12B are made of aluminum with a melting point of 660°C, the second minimum distance L2 can be set to be less than or equal to the first minimum distance L1 in this embodiment.

For an embodiment of the battery cell where the material of the first tabs 11B has a melting point higher than that of the material of the second tabs 12B, the material of the first tabs 11B with a higher melting point requires more welding heat to form a weld pool. Accordingly, the first tab stacking structure 111 generates more heat during welding. When the first tab stacking structure 111 generates more heat, there is a risk of the spacer 13 being burned by thermal radiation, even if it does not directly contact the first tab stacking structure 111. Therefore, by ensuring that the first minimum distance L1 is not less than the second minimum distance L2, the risk of the spacer portion corresponding to the first tab stacking structure 111 being scorched, as well as the risk of the spacer being burned by thermal radiation due to its proximity to the first tab stacking structure 111, can be reduced.

With reference to FIGS. 11 and 12, in the first direction d1, there is a third minimum distance L3 between the bending position 11f of the plurality of first tabs 11B and a tab top 11t of the plurality of first tabs 11B, and there is a fourth minimum distance L4 between the bending position 12f of the plurality of second tabs 12B and a tab top 12t of the plurality of second tabs 12B.

When the bending position 11f of the plurality of first tabs 11B is a position where the tabs are cut on the portion of the first current collector substrate 11A that is uncovered by the first active material layer 11C, the third minimum distance L3 is the minimum distance in the first direction d1 between the cutting root 11r of the plurality of first tabs 11B and the tab top 11t of the plurality of first tabs 11B, which is equivalent to the height of the first tabs 11B. When the bending position 12f of the plurality of second tabs 12B is a position where the tabs are cut on the portion of the current collector substrate that is uncovered by the active material layer, the fourth minimum distance L4 is the minimum distance in the first direction d1 between the cutting root 12r of the plurality of second tabs 12B and the tab top 12t of the plurality of first tabs 12B, which is equivalent to the height of the second tabs 12B.

FIG. 13 is a sectional schematic diagram of the structure in which tab stacking structures are welded to conductive members in some embodiments of the electrode assembly according to the present disclosure.

With reference to FIGS. 11, 12, and 13, in some embodiments, a first thickness t1 of the plurality of first tabs 11B in a thickness direction of the first tabs 11B is less than a second thickness t2 of the plurality of second tabs 12B in a thickness direction of the second tabs 12B, with the third minimum distance L3 being greater than or equal to the fourth minimum distance L4.

The third minimum distance L3 and the fourth minimum distance L4 respectively represent the lengths of the first tabs 11B and the second tabs 12B that are bent and involved in stacking. The longer the lengths of the tabs involved in stacking, the higher the degree of tab overlap. The first thickness t1 of the first tabs 11B represents the thickness of a single layer of first tab 11B, and the second thickness t2 of the second tabs 12B represents the thickness of a single layer of second tab 12B. The thicker the single layer of tab, the thicker the tab stacking structure formed after stacking.

For an embodiment of the battery cell 30 where the first thickness t1 is less than the second thickness t2, by ensuring that the third minimum distance L3 is greater than or equal to the fourth minimum distance L4, the thicknesses of the first tab stacking structure 111 and the second tab stacking structure 121 can be made closer. This helps reduce the risk of burning or scorching of the spacer portion caused by differences in welding heat when forming the weld pool mp.

In some other embodiments, a first thickness t1 of the plurality of first tabs 11B in a thickness direction of the first tabs 11B is greater than a second thickness t2 of the plurality of second tabs 12B in a thickness direction of the second tabs 12B, with the third minimum distance L3 being less than or equal to the fourth minimum distance L4.

For an embodiment of the battery cell 30 where the first thickness t1 is greater than the second thickness t2, by ensuring that the third minimum distance L3 is less than or equal to the fourth minimum distance L4, the thicknesses of the first tab stacking structure 111 and the second tab stacking structure 121 can be made closer. This helps reduce the risk of burning or scorching of the spacer portion caused by differences in welding heat when forming the weld pool mp.

In the embodiments described above, a ratio A/B of a product A of the first thickness t1 of the plurality of first tabs 11B in the thickness direction of the first tabs 11B and the third minimum distance L3 to a product B of the second thickness t2 of the plurality of second tabs 12B in the thickness direction of the second tabs 12B and the fourth minimum distance L4 satisfies 0.2≤A/B≤4, with the first thickness t1, the second thickness t2, the third minimum distance L3, and the fourth minimum distance L4 having the same unit, for example, all in mm or cm.

The product A of the first thickness t1 and the third minimum distance L3 represents the stacking thickness of the first tab stacking structure 111, while the product B of the second thickness t2 and the fourth minimum distance L4 represents the stacking thickness of the second tab stacking structure 121. The ratio of the product A to the product B can reflect the degree of difference in stacking thickness between the first tab stacking structure 111 and the second tab stacking structure 121.

If the ratio A/B is too large, the first tab stacking structure 111 is relatively thicker, requiring higher welding power during welding and thus generating more welding heat, which increases the risk of burning or scorching of the spacer portion corresponding to the first tab stacking structure 111 compared to the second tab stacking structure 121.

If the ratio A/B is too small, the second tab stacking structure 121 is relatively thicker, requiring higher welding power during welding and thus generating more welding heat, which increases the risk of burning or scorching of the spacer portion corresponding to the second tab stacking structure 121 compared to the first tab stacking structure 111.

Therefore, by ensuring that the ratio A/B satisfies 0.2 ≤ A/B ≤ 4, the difference in stacking thickness between the first tab stacking structure 111 and the second tab stacking structure 121 is reduced, thereby lowering the risk of burning or scorching of the spacer portions corresponding to the first tab stacking structure 111 and the second tab stacking structure 121.

Furthermore, the ratio A/B can satisfy: 0.5 ≤ A/B ≤ 2, for example, setting A/B equal to 0.5, 0.8, 1, 1.2, 1.6, or 2.

By further limiting the ratio A/B to satisfy 0.5 ≤ A/B ≤ 2, the difference in stacking thickness between the first tab stacking structure 111 and the second tab stacking structure 121 can be further reduced, thereby more effectively lowering the risk of burning or scorching of the spacer portions corresponding to the first tab stacking structure 111 and the second tab stacking structure 121.

With reference to FIG. 13, in some embodiments, a ratio A/B of a product A of the first thickness t1 of the plurality of first tabs 11B in the thickness direction of the first tabs 11B and the third minimum distance L3 to a product B of the second thickness t2 of the plurality of second tabs 12B in the thickness direction of the second tabs 12B and the fourth minimum distance L4 satisfies A/B<1, with the first thickness t1, the second thickness t2, the third minimum distance L3, and the fourth minimum distance L4 having the same unit, for example, all in mm or cm. Accordingly, the third thickness t3 of the first conductive member 21 in the first direction d1 is less than the fourth thickness t4 of the second conductive member 22 in the first direction d1.

The product A of the first thickness t1 and the third minimum distance L3 represents the stacking thickness of the first tab stacking structure 111, while the product B of the second thickness t2 and the fourth minimum distance L4 represents the stacking thickness of the second tab stacking structure 121. For an embodiment of the battery cell where the product A is less than the product B, the second tab stacking structure 121 with a greater stacking thickness requires higher welding power for welding. However, fluctuations in higher laser power can easily result in the formation of an overly deep weld pool, increasing the risk of burning or scorching of the spacer.

Therefore, a thicker second conductive member 22 is adopted to improve the tolerance of welding, reducing the likelihood of forming an overly deep weld pool, thereby lowering the risk of burning or scorching of the spacer portion corresponding to the second tab stacking structure 121. On the other hand, the thinner first conductive member 21, paired with the first tab stacking structure 111 with a smaller stacking thickness, allows for welding using lower welding power. Accordingly, it is easier to form a weld pool with an appropriate depth, thereby reducing the risk of burning or scorching of the spacer portion corresponding to the first tab stacking structure 111.

In some other embodiments, a ratio A/B of a product A of the first thickness t1 of the plurality of first tabs 11B in the thickness direction of the first tabs 11B and the third minimum distance L3 to a product B of the second thickness t2 of the plurality of second tabs 12B in the thickness direction of the second tabs 12B and the fourth minimum distance L4 satisfies A/B>1, with the first thickness t1, the second thickness t2, the third minimum distance L3, and the fourth minimum distance L4 having the same unit, for example, all in mm or cm. Accordingly, the third thickness t3 of the first conductive member 21 in the first direction d1 is greater than the fourth thickness t4 of the second conductive member 22 in the first direction d1.

The product A of the first thickness t1 and the third minimum distance L3 represents the stacking thickness of the first tab stacking structure 111, while the product B of the second thickness t2 and the fourth minimum distance L4 represents the stacking thickness of the second tab stacking structure 121. For an embodiment of the battery cell 30 where the product B is less than the product A, the first tab stacking structure 111 with a greater stacking thickness requires higher welding power for welding. However, fluctuations in higher laser power can easily result in the formation of an overly deep weld pool, increasing the risk of burning or scorching of the spacer.

Therefore, a thicker first conductive member 21 is adopted to improve the tolerance of welding, reducing the likelihood of forming an overly deep weld pool, thereby lowering the risk of burning or scorching of the spacer portion corresponding to the first tab stacking structure 111. On the other hand, the thinner second conductive member 22, paired with the second tab stacking structure 121 with a smaller stacking thickness, allows for welding using lower welding power. Accordingly, it is easier to form a weld pool with an appropriate depth, thereby reducing the risk of burning or scorching of the spacer portion corresponding to the second tab stacking structure 121.

Based on the various embodiments of the aforementioned battery cell, and with reference to FIG. 2, an embodiment of the present disclosure provides a battery 40, including the battery cell 30 according to any of the preceding embodiments. The battery adopting the aforementioned battery cell can effectively enhance the safety of use.

Based on the various embodiments of the aforementioned battery, and with reference to FIG. 1, an embodiment of the present disclosure provides an electrical apparatus, including the battery 40 according to any of the preceding embodiments. The electrical apparatus adopting the aforementioned battery can effectively enhance the safety of use.

In some specific embodiments, as shown in FIGS. 5 to 7 and FIG. 11, the battery cell 30 is cylindrical and includes an electrode assembly 10, a first conductive member 21, a second conductive member 22, a shell 31, and an electrode terminal 32. The shell 31 has a chamber for accommodating the electrode assembly 10, the first conductive member 21, and the second conductive member 22. The shell 31 may include a case 311 and an end cover 312. The case 311 has an opening 311A at one end, and the end cover 312 covers the opening 311A. The case 311 includes a side wall 311B and a bottom wall 311C. The side wall 311B surrounds the outer side of the electrode assembly 10, and the bottom wall 311C is disposed opposite to the opening 311A. The bottom wall 311C is provided with a through hole 311D. The electrode terminal 32 is provided on the through hole 311D via an electrode lead-out portion 34 and a first insulating member 33.

The battery cell 30 includes an electrode assembly 10, a first conductive member 21, and a second conductive member 22. The electrode assembly 10 includes a first electrode plate 11, a second electrode plate 12, and a spacer 13, where the first electrode plate 11 and the second electrode plate 12 have opposite polarities, the spacer 13 is positioned between the first electrode plate 11 and the second electrode plate 12, and the first electrode plate 11, the second electrode plate 12, and the spacer 13 are wound along a winding direction wd to form a cylindrical winding structure 100. The spacer 13 is provided in the form of a separator between the first electrode plate 11 and the second electrode plate 12.

The first electrode plate 11 includes a first current collector substrate 11A and a plurality of first tabs 11B, where the plurality of first tabs 11B are connected to the first current collector substrate 11A and arranged at intervals along the winding direction wd, and the plurality of first tabs 11B are at least partially bent at an end portion of the winding structure 100 to form a first tab stacking structure 111.

The second electrode plate 12 includes a second current collector substrate 12A and a plurality of second tabs 12B, where the plurality of second tabs 12B are connected to the second current collector substrate 12A and arranged at intervals along the winding direction wd, and the plurality of second tabs 12B are at least partially bent at an end portion of the winding structure 100 to form a second tab stacking structure 121.

The first conductive member 21 is welded to the first tab stacking structure 111 and to the electrode lead-out portion 34 to achieve electrical connection with the electrode terminal 32. The second conductive member 22 is welded to the second tab stacking structure 121 and to the end cover 312.

In the first direction d1, the first tab stacking structure 111 and the second tab stacking structure 121 are respectively positioned at end portions on two opposite sides of the winding structure 100. The first conductive member 21 and the second conductive member 22 are positioned on two sides of the electrode assembly 10 in the first direction d1.

The first electrode plate 11 is a positive electrode plate, and both the material of its first current collector substrate 11A and the material of the first tabs 11B, which are obtained by cutting the portion of the first current collector substrate 11A that is uncovered by the first active material layer 11C, are aluminum. The second electrode plate 12 is a negative electrode plate, and both the material of its second current collector substrate 12A and the material of the second tabs 12B, which are obtained by cutting the portion of the second current collector substrate 12A that is uncovered by the second active material layer 12C, are copper.

The melting point of aluminum is lower than that of copper. With reference to FIG. 11, the first minimum distance L1 is less than the second minimum distance L2. The second thickness t2 of the second tabs 12B is greater than the first thickness t1 of the first tabs 11B, and the third minimum distance L3 is greater than the fourth minimum distance L4.

While the present disclosure has been described with reference to the preferred embodiments, various modifications may be made and components therein may be replaced with equivalents without departing from the scope of the present disclosure. In particular, the technical features mentioned in the various examples can be combined in any manner as long as there is no structural conflict. The present disclosure is not limited to the specific embodiments disclosed herein, but rather includes all technical solutions falling within the scope of the claims.

## Claims

1. A battery cell (30), comprising:
an electrode assembly (10) comprising a first electrode plate (11), a second electrode plate (12), and a spacer (13), wherein the first electrode plate (11) and the second electrode plate (12) have opposite polarities, the spacer (13) is positioned between the first electrode plate (11) and the second electrode plate (12), and the first electrode plate (11), the second electrode plate (12), and the spacer (13) are wound along a winding direction (wd) to form a winding structure (100), with the first electrode plate (11) comprising a plurality of first tabs (11B) that are bent at an end portion of the winding structure (100) to form a first tab stacking structure (111), and the second electrode plate (12) comprising a plurality of second tabs (12B) that are bent at an end portion of the winding structure (100) to form a second tab stacking structure (121);
a first conductive member (21) welded to the first tab stacking structure (111); and
a second conductive member (22) welded to the second tab stacking structure (121),
wherein in a first direction (d1) parallel to an extension direction of a winding axis of the winding structure (100), there is a gap between the spacer (13) and at least one of a bending position (11f) of the plurality of first tabs (11B) and a bending position (12f) of the plurality of second tabs (12B) in the first direction (d1).

2. The battery cell (30) according to claim 1, wherein a minimum distance between the bending position (11f) of the plurality of first tabs (11B) and the spacer (13) in the first direction (d1) is defined as a first minimum distance L1, and a minimum distance between the bending position (12f) of the plurality of second tabs (12B) and the spacer (13) in the first direction (d1) is defined as a second minimum distance L2; and
the material of the plurality of first tabs (11B) has a melting point lower than that of the material of the plurality of second tabs (12B), with the first minimum distance L1 being less than or equal to the second minimum distance L2.

3. The battery cell (30) according to claim 1, wherein a minimum distance between the bending position (11f) of the plurality of first tabs (11B) and the spacer (13) in the first direction (d1) is defined as a first minimum distance L1, and a minimum distance between the bending position (12f) of the plurality of second tabs (12B) and the spacer (13) in the first direction (d1) is defined as a second minimum distance L2; and
the material of the plurality of first tabs (11B) has a melting point higher than that of the material of the plurality of second tabs (12B), with the second minimum distance L2 being less than or equal to the first minimum distance L1.

4. The battery cell (30) according to any one of claims 1 to 3, wherein the bending position (11f) of the plurality of first tabs (11B) is a cutting root (11r) of the plurality of first tabs (11B), and/or the bending position (12f) of the plurality of second tabs (12B) is a cutting root (12r) of the plurality of second tabs (12B).

5. The battery cell (30) according to any one of claims 1 to 4, wherein in the first direction (d1), there is a third minimum distance L3 between the bending position (11f) of the plurality of first tabs (11B) and a tab top (11t) of the plurality of first tabs (11B), and there is a fourth minimum distance L4 between the bending position (12f) of the plurality of second tabs (12B) and a tab top (12t) of the plurality of second tabs (12B); and
a first thickness t1 of the plurality of first tabs (11B) in a thickness direction of the first tabs (11B) is less than a second thickness t2 of the plurality of second tabs (12B) in a thickness direction of the second tabs (12B), with the third minimum distance L3 being greater than or equal to the fourth minimum distance L4.

6. The battery cell (30) according to any one of claims 1 to 4, wherein in the first direction (d1), there is a third minimum distance L3 between the bending position (11f) of the plurality of first tabs (11B) and a tab top (11t) of the plurality of first tabs (11B), and there is a fourth minimum distance L4 between the bending position (12f) of the plurality of second tabs (12B) and a tab top (12t) of the plurality of second tabs (12B); and
a first thickness t1 of the plurality of first tabs (11B) in a thickness direction of the first tabs (11B) is greater than a second thickness t2 of the plurality of second tabs (12B) in a thickness direction of the second tabs (12B), with the third minimum distance L3 being less than or equal to the fourth minimum distance L4.

7. The battery cell (30) according to claim 5 or 6, wherein a ratio A/B of a product A of the first thickness t1 of the plurality of first tabs (11B) in the thickness direction of the first tabs (11B) and the third minimum distance L3 to a product B of the second thickness t2 of the plurality of second tabs (12B) in the thickness direction of the second tabs (12B) and the fourth minimum distance L4 satisfies 0.2≤A/B≤4, with the first thickness t1, the second thickness t2, the third minimum distance L3, and the fourth minimum distance L4 having the same unit.

8. The battery cell (30) according to claim 7, wherein the ratio A/B satisfies 0.5≤A/B≤2.

9. The battery cell (30) according to claim 5 or 6, wherein a ratio A/B of a product A of the first thickness t1 of the plurality of first tabs (11B) in the thickness direction of the first tabs (11B) and the third minimum distance L3 to a product B of the second thickness t2 of the plurality of second tabs (12B) in the thickness direction of the second tabs (12B) and the fourth minimum distance L4 satisfies A/B<1, with the first thickness t1, the second thickness t2, the third minimum distance L3, and the fourth minimum distance L4 having the same unit, and a third thickness t3 of the first conductive member (21) in the first direction (d1) is less than a fourth thickness t4 of the second conductive member (22) in the first direction (d1).

10. The battery cell (30) according to claim 5 or 6, wherein a ratio A/B of a product A of the first thickness t1 of the plurality of first tabs (11B) in the thickness direction of the first tabs (11B) and the third minimum distance L3 to a product B of the second thickness t2 of the plurality of second tabs (12B) in the thickness direction of the second tabs (12B) and the fourth minimum distance L4 satisfies A/B>1, with the first thickness t1, the second thickness t2, the third minimum distance L3, and the fourth minimum distance L4 having the same unit, and a third thickness t3 of the first conductive member (21) in the first direction (d1) is greater than a fourth thickness t4 of the second conductive member (22) in the first direction (d1).

11. The battery cell (30) according to any one of claims 1 to 10, wherein in the first direction (d1), the first tab stacking structure (111) and the second tab stacking structure (121) are both positioned at end portions on the same side of the winding structure (100).

12. The battery cell (30) according to any one of claims 1 to 10, wherein in the first direction (d1), the first tab stacking structure (111) and the second tab stacking structure (121) are respectively positioned at end portions on two opposite sides of the winding structure (100).

13. The battery cell (30) according to any one of claims 1 to 12, further comprising:
a shell (31) having a chamber for accommodating the electrode assembly (10), the first conductive member (21), and the second conductive member (22); and
an electrode terminal (32) disposed on a wall portion of the shell (31) and electrically connected to the first conductive member (21) or the second conductive member (22).

14. The battery cell (30) according to claim 13, wherein the shell (31) comprises a case (311) and an end cover (312), the case (311) having an opening (311A) at an end, with the end cover (312) covering the opening (311A), and the case (311) comprising a side wall (311B) and a bottom wall (311C); and
the side wall (311B) surrounds the outer side of the electrode assembly (10) and the bottom wall (311C) is disposed opposite to the opening (311A), with the wall portion of the shell (31) being either the end cover (312) or the bottom wall (311C).

15. The battery cell (30) according to any one of claims 1 to 14, wherein the first electrode plate (11) further comprises a first current collector substrate (11A), with the plurality of first tabs (11B) connected to the first current collector substrate (11A) and arranged at intervals along the winding direction (wd), and in the first direction (d1), the bending position (11f) of the plurality of first tabs (11B) being positioned on a side of the spacer (13) that is away from the first current collector substrate (11A); and
the second electrode plate (12) further comprises a second current collector substrate (12A), with the plurality of second tabs (12B) connected to the second current collector substrate (12A) and arranged at intervals along the winding direction (wd), and in the first direction (d1), the bending position (12f) of the plurality of second tabs (12B) being positioned on a side of the spacer (13) that is away from the second current collector substrate (12A).

16. A battery (40), comprising:
the battery cell (30) according to any one of claims 1 to 15.

17. An electrical apparatus, comprising:
the battery (40) according to claim 16.
